# FASCICULE DE BREVET EUROPEEN

(11) **EP 0 465 308 B1**
(45) Date de publication et mention de la délivrance du brevet: **28.08.1996**
(21) Numéro de dépôt: 91401744.7
(22) Date de dépôt: 27.06.1991
(51) Int. Cl.: C03B 23/03, C03B 23/025

(54) **Four de bombage pour vitrages**
Ofen zum Biegen von Glasscheiben
Furnace for bending glass-sheets

(30) Priorité: 30.06.1990 DE 4020971
(43) Date de publication de la demande: 08.01.1992
(73) Titulaire: SAINT-GOBAIN VITRAGE, F-92400 Courbevoie (FR); VEGLA Vereinigte Glaswerke GmbH, D-52066 Aachen (DE)
(72) Inventeur: Promper, Hans-Josef, W-5100 Aachen (DE); D'Iribarne, Benoit, Laidon-Pasildon, Essex 15 6 EE (GB); Kuster, Hans-Werner, W-5100 Aachen (DE); Nowoczyn, Hans-Werner, W-5100 Aachen (DE); Vanaschen, Luc, B-4700 Eupen (BE)
(74) Mandataire: Menes, Catherine

(56) Documents cités:
- EP-A- 0 351 739
- FR-A- 1 041 758
- US-A- 4 071 344
- US-A- 4 260 408
- US-A- 4 756 735

## Description

La présente invention concerne un four de bombage de vitrages comportant plusieurs cellules de chauffage, un poste de bombage par pressage et au moins un poste de refroidissement, un système de transport des vitrages posés chacun sur un anneau de bombage monté sur un chariot mobile, les chariots étant accouplés les uns aux autres et transportés à travers le four de bombage par intermittence à l'intervention d'une machine installée à l'extrémité du four de bombage tirant le train de chariots, et des moyens pour arrêter et positionner précisément les chariots dans le poste de bombage par pressage.

Des fours de bombage du type évoqué brièvement ci-dessus équipent la majeur partie des installations de production de feuilles de verre bombées par paires en vue d'un assemblage dans un vitrage feuilleté composite. Lorsque la température de bombage est atteinte, les feuilles de verre se déforment sous l'effet de leur propre poids et s'effondrent sur l'anneau de bombage dont la périphérie de la feuille épouse ainsi la forme.

Pour compléter ce bombage par effondrement sur l'anneau de bombage, il peut être prévu un pressage au moyen d'une forme supérieure pleine montée dans une des dernières cellules de chauffage, au-dessus du plan de transport des vitrages et qui est abaissée pour venir presser la feuille de verre contre l'anneau inférieur (US-A-4 778 507). Ce pressage permet l'obtention de formes complexes, d'abaisser éventuellement la température de bombage et d'accroître la précision et la reproductibilité des formes obtenues.

L'anneau de bombage doit, à l'instant de l'opération de pressage, occuper une position déterminée, précisément à l'aplomb de la forme supérieure de bombage. A cet effet, il est connu de prévoir des moyens pour arrêter les chariots dans une position de référence. De plus, la forme supérieure de bombage et le chariot portant l'anneau périphérique sont pourvus d'un dispositif de verrouillage mécanique, du type doigts venant s'engager dans un logement conique.

Dans un four de bombage de ce type, le transport pas à pas du train de chariots s'effectue à l'intervention d'une machine de tirage installée à la sortie du four, et qui comporte un organe entraîneur en prise à chaque pas sur un nouveau chariot. Cet organe étant installé hors four, le chariot en prise directe est toujours séparé du chariot situé dans le poste de pressage par toute une série d'autres chariots. Cette grande distance entre le lieu où le positionnement précis est nécessaire et celui de commande des mouvements des chariots rend très difficile ce positionnement, d'autant que toutes les pièces subissent des déformations importantes suite à la dilatation thermique. La température est en effet de 500 degrés C et plus dans le poste de bombage par pressage, mais il convient de noter que, cette température varie énormément d'une extrémité du four à l'autre et que le train de chariots qui se trouve entre le poste de pressage et la sortie et la machine de tirage, est soumis à des variations de longueur notables qui au total peuvent atteindre environ 20 cm.

L'invention a pour but d'agencer un four de bombage du type spécifié d'une manière telle que le positionnement du chariot portant le moule de bombage périphérique, dans le poste de bombage par pressage, s'effectue avec une précision élevée et sans imprimer de secousses mécaniques au chariot.

Suivant l'invention, ce but est réalisé par le fait que la longueur de la course de la machine de tirage attaquant pas à pas le train de chariots peut être commandée en fonction de la température pour tenir compte de la variation de longueur du train de chariots due à la différence de température entre la cellule de bombage par pressage et le point d'attaque de la machine de tirage, un capteur de position étant installé dans la cellule de bombage par pressage, ce capteur commandant le moteur d'entraînement de la machine de tirage.

Avec ce système, on évite les secousses inévitables lorsque les chariots dans le poste de bombage par pressage butent contre des obstacles mécaniques ou lorsque le mouvement du train de chariots est interrompu à l'entrée du poste de bombage par pressage avant que le chariot ne vienne se positionner sous la forme supérieure dans un mouvement indépendant de celui de l'ensemble du train de chariots. De telles secousses peuvent en effet faire tomber les vitrages posés sur les anneaux de bombage périphérique, du moins les faire bouger, ce qui entraîne à la fois des défauts de bombage et des défauts optiques. Grâce au circuit de commande agissant, conformément à l'invention, directement sur la machine de tirage, un positionnement optimum sans secousse s'effectue à l'intérieur du poste de bombage par pressage, par le fait que la machine de tirage est chaque fois immobilisée à l'instant même où le chariot en question a atteint la position désirée, en tenant compte des variations de longueur du train de chariots imposées par les variations de température.

A titre de capteurs de position, on peut utiliser tout type de dispositifs connus, à la condition bien sûr qu'il supporte les températures qui règnent dans le poste de pressage. On peut ainsi utiliser des barrages photoélectriques ou des détecteurs pneumatiques du type décrit dans le document EP-A-348 266 qui se sont avérés particulièrement intéressants à cet effet.

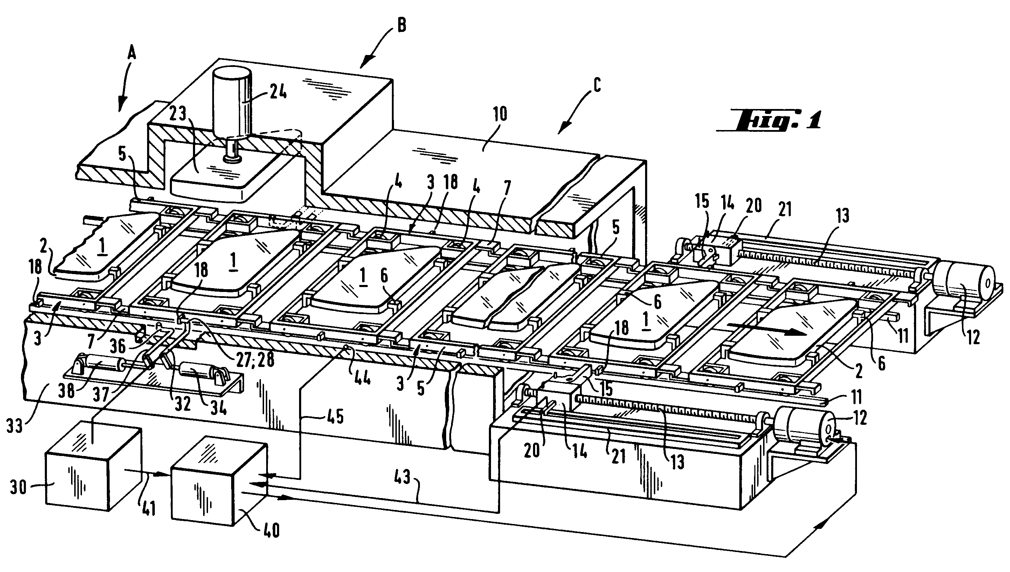

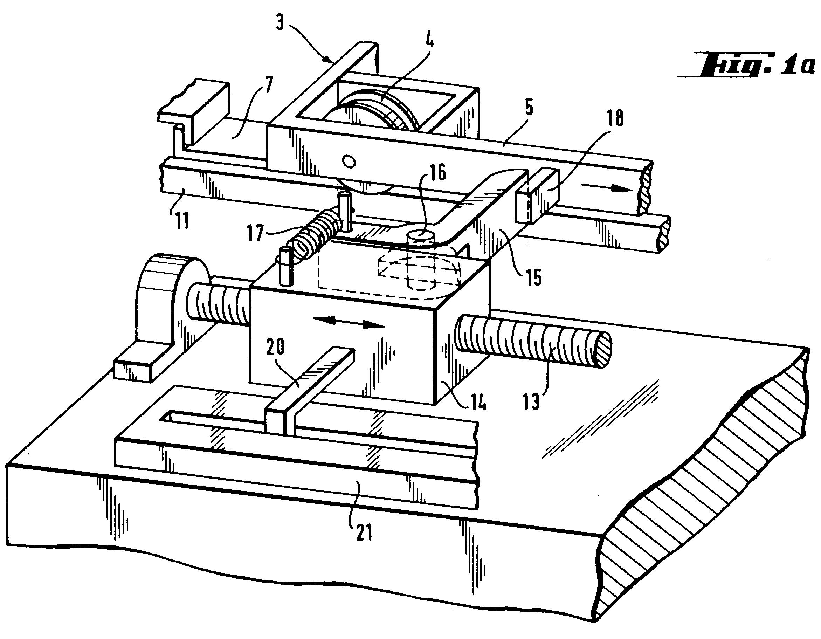

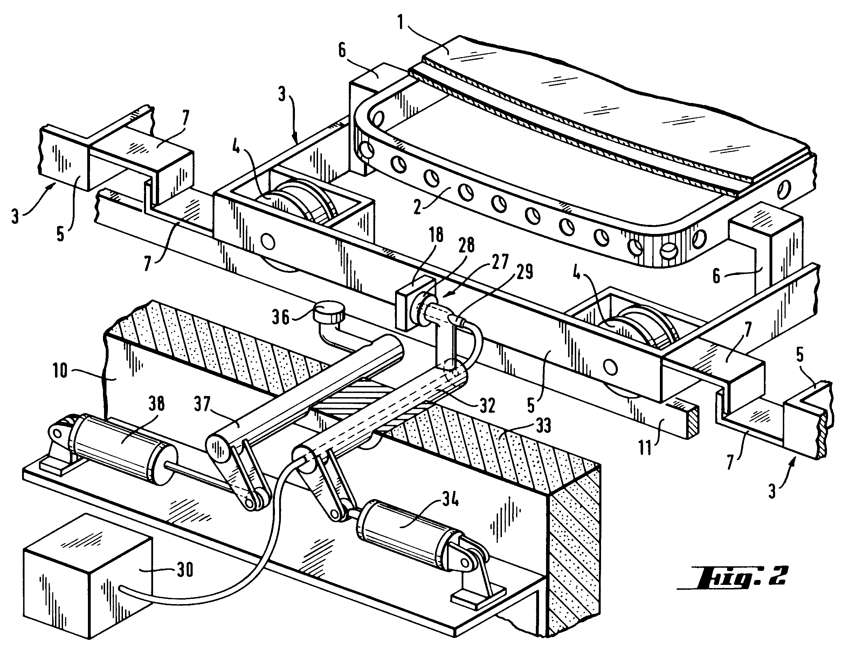

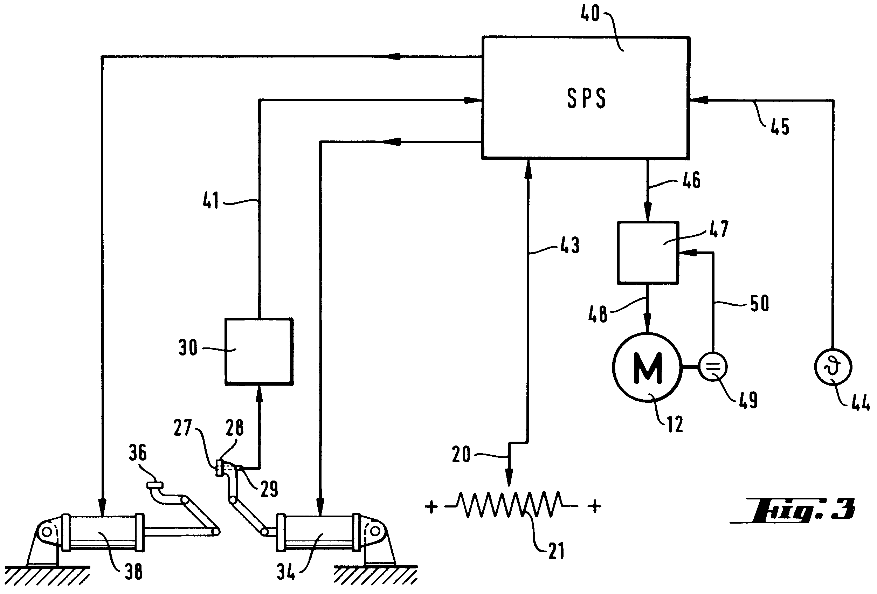

D'autres détails et caractéristiques avantageuses de l'invention sont décrits ci-après en référence aux dessins annexés qui représentent :
. **figure 1** : une perspective d'ensemble, partiellement arrachée, d'un four de bombage conforme à l'invention,
. **figure 1a** : un détail de la figure 1 à plus grande échelle,
. **figure 2** : une vue détaillée du détecteur de position et du dispositif d'arrêt du chariot dans le poste de bombage par pressage,
. **figure 3** : un schéma du circuit de commande de l'opération de positionnement.

Un four de bombage, dans lequel l'invention peut être utilisée, comprend comme le montre la figure 1, une zone A contenant une série de cellules de chauffage, une zone B contenant un poste de bombage par pressage et une zone C contenant une série de cellules de refroidissement. A titre indicatif, dans un four de production de capacité courante, la zone de chauffage A comporte de 5 à 12 cellules, et la zone de refroidissement C de 5 à 10 cellules. Par souci de clarté, seules deux cellules de refroidissement sont représentées sur les figures 1 et 2.

Des fours de bombage de ce type sont habituellement utilisés pour le bombage de paires de feuilles de verre superposées destinées à être assemblées par une feuille de matière plastique, par exemple du type polyvinylbutyral.

Chaque paire 1 est posée sur un anneau de bombage périphérique 2, monté sur un chariot mobile 3. Chaque chariot 3 comporte un cadre 5 porté par des roues 4 et des supports rigides 6 sur lesquels est fixé l'anneau. Les chariots 3 sont associés les uns à la suite des autres par des organes d'accouplement 7 prévus aux extrémités antérieure et postérieure de chaque cadre 5. Les organes d'accouplement 7 sont agencés d'une manière telle que, dans la direction générale de transport montrée par une flèche, les chariots sont accouplés les uns aux autres en un train cohérent, alors que, lors d'un déplacement dans un sens transversal à la direction de transport, l'accouplement est détaché. De cette manière, à la sortie du four de bombage, les chariots peuvent être envoyés vers une voie latérale puis renvoyés vers l'entrée du four par une voie extérieure parallèle. Les chariots 3 sont ainsi déplacés en circuit fermé.

A l'intérieur de l'enceinte 10 du four, sont prévus, dans la zone A, les dispositifs de chauffage nécessaires et, dans la zone de refroidissement C, le cas échéant, les dispositifs de refroidissement ici non représentés. Les chariots 3 parcourent l'enceinte 10 du four sur des rails 11. Le placement du train de chariots s'effectue pas à pas, ce train étant tiré vers l'aval de la distance d'une longueur de chariot à chaque pas d'avancement. Le dispositif d'entraînement comprend deux moteurs d'entraînement 12 à réducteur, qui font chacun tourner une tige filetée 13 parallèle aux rails 11. L'ensemble du dispositif d'entraînement est disposé à l'arrière du four de bombage, dans la zone froide. Chaque tige filetée 13 déplace un chariot porte-cliquet 14 sur lequel un cliquet entraîneur 15 est chaque fois monté pivotant autour d'un axe vertical 16. Le cliquet entraîneur 15 est maintenu dans la position de travail représentée par un ressort 17. Chaque cliquet entraîneur 15 s'engage derrière un talon 18 qui est prévu sur le cadre 5 de chaque chariot 3.

Sur le chariot porte-cliquet 14 est également monté le curseur 20 d'un potentiomètre linéaire 21 et ce, parallèlement à la tige filetée 13. Le potentiomètre 21 mesure le trajet parcouru par le train ou plus exactement la longueur de la course parcourue par le chariot porte-cliquet 14. Les signaux électriques émis par le potentiomètre 21 sont transmis par la ligne 43 à un processeur 40 commandant le moteur 12 et réglant la longueur de la course de la machine de tirage. En lieu de place d'un potentiomètre, on peut utiliser tout autre dispositif de mesure du trajet parcouru par le chariot porte-cliquet 14 ou directement par le train de chariots, comme par exemple un générateur d'impulsions de rotation couplé à la tige filetée 13.

Dans les cellules de la zone de chauffage A et de la zone de refroidissement C, un positionnement précis des chariots 3 n'est pas nécessaire. Par contre, ce positionnement est primordial pour le pressage. En effet, au-dessus de la piste de transport des vitrages, dans la zone de bombage par pressage B est disposé une forme supérieure de bombage 23 qui est animée de mouvements de montée-baisse par exemple au moyen d'un vérin pneumatique 24 ou de tout autre dispositif équivalent et qui vient presser les feuilles de verre posées sur l'anneau de bombage.

La section du train de chariots comprise entre le poste de bombage par pressage B et le point d'attaque du dispositif de tirage comprend en règle générale de 5 à 10 chariots, ce qui correspond à une longueur d'environ 10 à 20 m. Les variations de longueur qui se produisent sur cette distance et qui résultent de dimensions de chariots différentes et de dilatations en longueur différentes de plus ou moins grandes amplitudes selon les températures auxquelles les chariots sont soumis peuvent s'élever jusqu'à 20 cm.

Dans le poste de pressage B, comme il est plus particulièrement visible figure 2, est disposé à côte de la piste de transport un détecteur de position pneumatique 27 actionné par le talon 18 disposé dans le plan médian de chaque chariot 3. Le détecteur 27 émet un jet gazeux qui est interrompu lorsque s'approche le talon 18 porté par le chariot 3, ce détecteur - dont on trouvera une description détaillée dans la demande de brevet EP-A-348 266 - comprend un tube métallique 29 émettant le jet gazeux et débouchant au centre de la butée 28, perpendiculairement à cette face d'arrêt. Le jet gazeux est renvoyé par le talon 18 à l'approche de celui-ci et le courant de retour est détecté par le palpeur d'un commutateur à interruption de jet 30 qui émet une impulsion de commande transmise au processeur 40.

La butée 28 est montée sur l'extrémité d'un arbre 32 tournant guidé de l'extérieur, à travers la paroi latérale 33 du four et qui peut être tourné de 90 degrés par un vérin pneumatique 34, de sorte que la butée 28 pivote pour passer de la position supérieure, où elle est ici représentée à une position inférieure dans laquelle elle libère le chemin du talon 18 et ainsi du chariot 3. En amont de la butée 28 est prévue une deuxième butée 36, également pivotante, prenant appui de l'autre côté contre le talon 18 et qui, conjointement avec la butée 28, fixe le talon 18 et ainsi le chariot 3 dans sa position d'extrémité dans le poste de pressage. Cette butée 36 est montée sur un arbre 37 actionné par le vérin pneumatique 38. Les vérins 34 et 38 sont actionnés par le circuit de commande central.

Un thermocouple 44 est installé dans le four. Les signaux de ce thermocouple 44 sont amenés par la ligne 45 également au processeur 40 où ils servent de paramètres pour la commande du moteur 12.

La figure 3 est une vue schématique du circuit de commande des moteurs 12 de la machine de tirage. Le circuit de commande comprend un processeur central 40, qui reçoit les signaux du détecteur pneumatique 27, via la ligne 41, du potentiomètre 20, 21, via la ligne 43, et du thermocouple 44, via la ligne 45. Le processeur 40 commande, via la ligne 46, l'amplificateur de régulation 47 qui, pour sa part, commande le moteur 12 via la ligne 48. Le circuit de régulation du moteur 12 comprend le générateur tachymétrique 49 couplé au moteur 12, et relié à l'amplificateur de régulation via la ligne 50.

Le processeur 40 commande, en outre, le vérin pneumatique 34, qui actionne la butée mécanique 28, et le vérin pneumatique 38 qui actionne la butée mécanique 36.

Une des tâches principales du processeur 40 consiste, sur la base de la température du four mesurée par le thermocouple 44, à calculer la variation de longueur du train et ainsi à déterminer le point initial et le point final de la distance parcourue, c'est-à-dire de la course de la machine de tirage. Cette détermination permet un positionnement approximatif du chariot dans le poste de pressage B relativement éloigné, le positionnement fin étant obtenu grâce à l'incorporation dans le circuit de commande du détecteur de position et du verrouillage mécanique.

Le mode de fonctionnement du circuit de commande décrit est le suivant.

Au début d'un temps de travail de la machine de tirage, le chariot porte-cliquet 14 est ramené, jusqu'à un point initial prédéfini, par la tige filetée 13, dans le sens opposé à la direction de transport du train de chariots. Pendant ce mouvement de retour, le cliquet entraîneur 15 glisse, par pivotement autour de l'axe 16, par-dessus le talon 18. Lorsque le chariot porte-cliquet 14 a atteint son point de départ, le sens de rotation du moteur 12 est inversé et un avancement lent du chariot porte-cliquet 14 est enclenché jusqu'à ce que le cliquet entraîneur 15 ait atteint le talon 18. Dans cette position, le moteur 12 est mis hors circuit.

Le vérin pneumatique 34 est alors actionné et la butée 28 abaissée, de sorte que le trajet du train est libéré. Immédiatement après, le moteur 12 est remis en route et accélère à présent le chariot porte-cliquet 14. Peu après, le vérin pneumatique 34 est à nouveau actionné et la butée 28 est ainsi ramenée dans sa position de travail. Le moteur 12 tire le train de chariots à une vitesse élevée jusqu'à un point préalablement calculé par le processeur auquel le talon 18 du chariot se trouve dans le poste de bombage par pressage à quelques centimètres devant la butée 28. Ce point est calculé par le processeur 40 en fonction de la température mesurée du four. Dès qu'est atteint ce point dont la position a été déterminée approximativement par le potentiomètre, le moteur 12 est commuté sur sa vitesse lente.

Le train continue sa course à vitesse lente jusqu'à ce que le détecteur de position intégré dans la butée 28 annonce que le talon 18 a atteint cette butée 28. Le chariot se trouvant dans le poste de bombage par pressage est bloqué par la butée dans cette position. Pour éviter un retour du chariot, le moteur d'entraînement 12 reste quelques temps sous tension. A présent, le vérin pneumatique 28 est actionné au moyen du détecteur de position 27, la butée mécanique 36 est alors soulevée dans sa position de travail. Le talon 18 - et ainsi le chariot se trouvant dans le poste pressage - est à présent fixé entre ces deux butées 28 et 36. L'opération de positionnement est de ce fait terminée et le moteur 12 est mis hors circuit.

A titre de moteur d'entraînement 12, on peut utiliser en particulier un servomoteur à courant triphasé, qui peut être bloqué mécaniquement de n'importe quelle manière sans que le moteur proprement dit ne soit endommagé.

## Revendications

1. Four de bombage pour des vitrages (1) comportant plusieurs cellules de chauffage, un poste de bombage par pressage, au moins une cellule de refroidissement, un système de transport des vitrages posés chacun sur un anneau de bombage (2) monté sur un chariot mobile (3), dans lequel les chariots accouplés les uns aux autres en un train sont transportés à travers le four de bombage par intermittence à l'intervention d'une machine (12 à 15) installée à l'extrémité du four de bombage tirant le train de chariots, et des moyens (18, 28, 36) pour arrêter et positionner précisément les chariots dans le poste de bombage par pressage, **caractérisé en ce que** la longueur de la course de la machine de tirage attaquant pas à pas le train de chariots est commandée en fonction de la température pour tenir compte de la variation de longueur du train de chariots due à la différence de température entre le poste de pressage et le point d'attaque de la machine de tirage, un capteur de position (27) étant installé dans le poste de bombage par pressage, ce capteur commandant le moteur d'entraînement (12) de la machine de tirage.

2. Four de bombage suivant la revendication 1, **caractérisé en ce que** la commande du point d'attaque de la machine de tirage (12 à 15) sur le train de chariots (3) et de la longueur de sa course s'effectue à l'aide d'un processeur (40) suivant un programme prédéfini en fonction de la température du four.

3. Four de bombage suivant les revendications 1 et 2, **caractérisé en ce que** le capteur de position est un détecteur pneumatique (27, 30).

4. Four de bombage suivant la revendication 3, **caractérisé en ce que** le jet gazeux du détecteur (27, 30) est émis dans un sens opposé à celui de l'avancement du train de chariots (3), et vient buter contre un talon (18) monté latéralement en saillie du chariot (3), ce jet étant émis par un tube (29) qui peut être écarté du domaine d'avancement du talon (18).

5. Four de bombage suivant la revendication 4, **caractérisé en ce que** le tube (29) émettant le jet gazeux débouche sur une butée mécanique (28) déterminant la position d'extrémité du chariot (3) dans la chambre de bombage par pressage.

6. Four de bombage suivant la revendication 5, **caractérisé en ce qu**'en amont de la butée mécanique (28) est installée une butée (36) pivotante qui agit sur l'autre côté du talon (18) et qui, conjointement avec la butée (28), bloque le chariot (3) dans sa position d'extrémité souhaitée.

7. Four de bombage suivant l'une quelconque des revendications 4 à 6, **caractérisé en ce que** le talon (18) est situé dans le plan médian du chariot (3).

8. Four de bombage suivant l'une quelconque des revendications 2 à 7, **caractérisé en ce qu**'à l'aide du programme prédéfini dans le processeur (40), la fin de chaque course est parcourue à vitesse lente.

9. Four de bombage suivant l'une quelconque des revendications 1 à 8, **caractérisé en ce que** la machine de tirage actionnée par le moteur d'entraînement (12) comporte au moins une tige filetée d'entraînement (13) montée parallèlement au train de chariots (3), à côté de celui-ci, et un chariot porte-cliquet (14) pourvu d'un cliquet entraîneur (15).

## Claims

1. Bending furnace for panes (1), comprising several heating compartments, a station for bending by pressing, at least one cooling compartment, a system for transporting the panes each resting on a bending ring (2), mounted on a movable carriage (3), in which the carriages, coupled to one another to form a train, are conveyed through the bending furnace intermittently by the intervention of a machine (12 to 15) installed at the end of the bending furnace and pulling the train of carriages, and means (18, 28, 36) for stopping and positioning the carriages accurately in the pressing bending station, characterized in that the length of the stroke of the pulling machine acting step by step on the train of carriages is controlled as a function of the temperature to take account of the variation in length of the train of carriages due to the temperature difference between the pressing station and the point of action of the pulling machine, a position pick-up (27) being installed in the pressing bending station, this pick-up governing the drive motor (12) of the pulling machine.

2. Bending furnace according to Claim 1, characterized in that the governing of the point of action of the pulling machine (12 to 15) on the train of carriages (3) and of the length of its stroke is performed by means of a processor (40) according to a predetermined programme as a function of the temperature of the furnace.

3. Bending furnace according to Claims 1 and 2, characterized in that the position pick-up is a pneumatic detector (27, 30).

4. Bending furnace according to Claim 3, characterized in that the gaseous jet of the detector (27, 30) is emitted in a sense opposite to that of the travel of the train of carriages (3), and strikes against a heel (18) mounted laterally on and projecting from the carriage (3), this jet being emitted through a tube (29) which can be withdrawn from the field of movement of the heel (18).

5. Bending furnace according to Claim 4, characterized in that the tube (29) emitting the gas jet discharges onto a mechanical stop (28) determining the limiting position of the carriage (3) in the pressing bending compartment.

6. Bending furnace according to Claim 5, characterized in that, upstream of the mechanical stop (28) there is installed a pivotal stop (36), which acts on the other side of the heel (18) and which, conjointly with the stop (28), blocks the carriage (3) in its desired limiting position.

7. Bending furnace according to any one of Claims 4 to 6, characterized in that the heel (18) is situated in the median plane of the carriage (3).

8. Bending furnace according to any one of Claims 2 to 7, characterized in that, with the help of the predefined programme in the processor (40), the end of each stroke is performed at a slow speed.

9. Bending furnace according to any one of Claims 1 to 8, characterized in that the pulling machine actuated by the drive motor (12) comprises at least one threaded drive rod (13), mounted parallel to the train of carriages (3) and alongside it, and a pawl-carrier (14) equipped with an entraining pawl (15).

## Patentansprüche

1. Biegeofen für Glasscheiben (1), mit mehreren Heizkammern einer Preßbiegestation und wenigstens einer Kühlstation, sowie mit einem Transportsystem für die jeweils auf einer auf einem verfahrbaren Wagen (3) angeordneten Umfangsbiegeform (2) liegenden Glasscheiben, bei dem die zu einer Wagenkette aneinandergekoppelten Wagen von einer am Ende des Biegeofens angeordneten und dort an der Wagenkette angreifenden Ziehmaschine (12 bis 15) absatzweise durch den Biegeofen gefördert werden, und mit Mitteln (18,28,36) zum Anhalten und zum genauen Positionieren der Wagen in der Preßbiegestation,
**dadurch gekennzeichnet,** daß die Hublänge der taktweise an der Wagenkette angreifenden Ziehmaschine zur Berücksichtigung der temperaturbedingten Längenänderung der Wagenkette im Bereich zwischen der Preßbiegekammer und dem Angriffspunkt der Ziehmaschine in Abhängigkeit von der Temperatur steuerbar ist, und daß in der Preßbiegekammer ein den Antriebsmotor der Ziehmaschine ansteuernder Positionsdetektor (27) vorgesehen ist.

2. Biegeofen nach Anspruch 1, dadurch gekennzeichnet, daß die Steuerung des Angriffspunktes der Ziehmaschine (12 bis 15) an der Wagenkette (3) und ihrer Hublänge in Abhängigkeit von der Ofentemperatur mit Hilfe eines Prozessors (40) nach einem vorgegebenen Programm erfolgt.

3. Biegeofen nach Anspruch 1 und 2, dadurch gekennzeichnet, daß der Positionsdetektor ein pneumatischer Detektor (27,30) ist.

4. Biegeofen nach Anspruch 3, dadurch gekennzeichnet, daß der Gasstrahl des Detektors (27,30) entgegengesetzt zur Fahrtrichtung der Wagenkette (3) gerichtet ist und von einer seitlich an jedem Wagen (3) angeordneten vorstehenden Nase (18) betätigt wird, wobei der Gasstrahl aus einem Düsenrohr (29) austritt, das aus dem Fahrbereich der Nase (18) herausschwenkbar ist.

5. Biegeofen nach Anspruch 4, dadurch gekennzeichnet, daß das den Gastrahl erzeugende Düsenrohr (29) in einem mechanischen Anschlag (28) mündet, der die Endpostion des Wagens (3) in der Preßbiegekammer bestimmt.

6. Biegeofen nach Anspruch 5, dadurch gekennzeichnet, daß stromaufwärts des mechanischen Anschlags (28) ein auf die andere Seite der Nase (18) wirkender verschwenkbarer Anschlag (36) angeordnet ist, der gemeinsam mit dem Anschlag (28) den Wagen (3) in der gewünschten Endposition blockiert.

7. Biegeofen nach einem der Ansprüche 4 bis 6, dadurch gekennzeichnet, daß die Nase (18) in der Mittelebene des Wagens (3) angeordnet ist.

8. Biegeofen nach einem der Ansprüche 2 bis 7, dadurch gekennzeichnet, daß mit Hilfe des im Prozessor (40) vorgegebenen Programms die letzte Wegstrecke eines jeden Hubes mit langsamer Geschwindigkeit durchfahren wird.

9. Biegeofen nach einem der Ansprüche 1 bis 8, dadurch gekennzeichnet, daß die von dem Antriebsmotor (12) betätigte Ziehmaschine wenigstens eine parallel zur Wagenkette (3) neben dieser angeordnete Antriebsspindel (13) und einen mit einer Mitnehmerklinke (15) versehenen Schlitten (14) umfaßt.
